# EUROPEAN PATENT APPLICATION

(11) **EP 1 817 988 A1**
(43) Date of publication of application: **15.08.2007**
(21) Application number: 07250551.4
(22) Date of filing: 12.02.2007
(51) Int. Cl.: A47G 1/16, A47G 1/14, F16B 21/09, F16B 35/04, F16B 35/06

(54) **Picture frame fixings**

(30) Priority: 14.02.2006 GB 0602883
(71) Applicant: Art Materials Service Inc., New Brunswick, NJ 08901 (US)
(72) Inventor: Eichert, Joseph Carl, Middlesex, NJ 08902 (US); Cubides, Wilson, Sommerset, NJ 08873 (US)
(74) Representative: Moffat, John Andrew

(57) **Abstract**

A picture frame fixing (15,15,16) for use in conjunction with a fastener (17,32) having a shank (18,34) and an enlarged head (19,35), the fixing (14,15,16) having therein a keyhole-shaped slot (21,51) comprising a large diameter portion (22,52) dimensioned to permit passage therethrough of the head (19,35) of the associated fastener (17,32), a narrower portion (23,53) dimensioned to receive the shank (18,34) of the fastener (17,32) but narrower than the head (19,35) of the fastener (17,32), and, intermediate the enlarged (22,52) and narrower (23,53) portions of the slot (21,51) a narrow neck region (24,54) the width of which is less than the corresponding dimension of the shank (18,34) of the associated fastener (17,32) such that during relative movement of the fixing (14,15,16) and the fastener (17,32) resilient deformation permits the shank (18,34) to pass through the narrow neck (24,54) to achieve a snap-fit in said narrower portion (23,53) of said keyhole-shaped slot (21,51).

## Description

This invention relates to picture frame fixings, to such fixings in combination with a fastener, and to picture frames incorporating such fixings.

The term "picture frame" is used herein in a broad sense to embrace within it framing arrangements for art materials, mirrors, calendars and the like. Moreover, within the term "picture frame" it is intended to embrace arrangements where there is a peripheral frame, for example a rectangular frame, within which art materials, mirror or the like is received, and those arrangements where there is a backing board, with or without a peripheral frame and upon which the art materials, mirror or the like is supported.

The term "picture frame fixings" is also intended to be construed broadly, to include a wide variety of fixings, primarily formed from sheet metal, sheet metal and wire, or moulded or stamped plastics materials, the majority of which are to be attached to a backing board, or a peripheral frame. Such fixings include hangers, spring clips, framing clips, easel backs, V-spring clips and the like. There is a wide variety of known picture frame fixings which are secured to a peripheral frame or the backing board of a picture frame by means of a fastener in the form of a rivet, screw or nail or the like, secured to the backing board or peripheral frame and having a shank of a first diameter protruding from the backing board or frame, the shank terminating in an enlarged head spaced from the backing board or the frame by the protruding part of the shank. The fixings of known form have a keyhole-shaped slot in the material of the fixing which is attached to the backing board or frame by introducing the enlarged head of the fastening through the large portion of the keyhole-shaped slot and then moving the fixing laterally with respect to the fastening so that the shank of the fastening is seated within the narrower portion of the keyhole-shaped slot and the head of the fastening overlies the material of the fixing bordering the narrower portion of the keyhole-shaped slot.

A well understood problem with conventional "key-hole slot" fixings is that they may be attached to their respective fastener at an early stage in the assembly of the picture frame and the partly assembled picture frame may then need to be transported for subsequent operations. Unless extreme care is taken during the transport of the partially assembled picture frame the fixing may slide relative to its fastener and become detached as the head of the fastener passes through the large portion of the keyhole-shaped slot in the fixing. Such disengagement with the attendant risk of loss of one or more fixings is also present when picture frames are subsequently stored and handled in a retail environment. It is an object of the present invention to provide a fixing wherein this disadvantage is minimised or obviated.

In accordance with the present invention there is provided a picture frame fixing for use in conjunction with a fastener having a shank and an enlarged head, the fixing having therein a keyhole-shaped slot comprising a large diameter portion dimensioned to permit passage therethrough of the head of the associated fastener, a narrower portion dimensioned to receive the shank of the fastener but narrower than the head of the fastener, and, intermediate the enlarged and narrower portions of the slot a narrow neck region the width of which is less than the corresponding dimension of the shank of the associated fastener such that during relative movement of the fixing and the fastener resilient deformation permits the shank to pass through the narrow neck to achieve a snap-fit in said narrower portion of said keyhole-shaped slot.

Conveniently said neck region of said slot is bounded by one or more elements integral with the material of the fixing, and moveable relative thereto, by resilient flexure of the element.

Preferably the or each element is in the form of a resilient finger.

The invention further resides in a fixing as defined above in combination with a fastener having a shank and an enlarged head.

Conveniently said fastener is a hollow tubular rivet having said head defined by a flange at one end thereof.

Alternatively said fastener is a screw having a threaded shank region, a plain shank region, and a head of larger diameter than the plain shank region.

Conveniently said plain shank region is of larger diameter than said threaded shank region.

Conveniently said plain shank region has a circumferential groove for receiving said fixing.

Alternatively said fastener includes a washer which abuts the end of the plain shank region and defines with said head, a circumferential groove for receiving said fixing.

The invention further resides in a picture frame incorporating the combination of a fixing and a fastener as defined above.

In the accompanying drawings:
Figure 1 is a diagrammatic rear elevational view of a picture frame and showing three different types of picture frame fixing in accordance with one example of the present invention;
Figure 2 is a side elevational view of the picture frame of Figure 1;
Figure 3 is an enlargement of part of the fixings illustrated in Figures 1 and 2;
Figure 4 is a view similar to part of Figure 1 of a modification thereof;
Figure 5 is a plan view of a further form of fixing in accordance with said one example of the invention;
Figure 6 is a side elevational view of the fixing of Figure 5;
Figure 7 is a side elevational view of a screw fastener for use with any of the fixings;
Figures 8 and 8A are side and end views respectively of further form of screw fastener;
Figure 9 is a view similar to Figure 8 of a still further form of screw fastener;
Figure 10 is a front elevational view of the fixing of Figures 22 and 23;
Figure 11 is a view similar to Figure 5, but to an enlarged scale, of a further alternative fixing in accordance with said one example of the invention;
Figures 12A and 12B are front and side elevational views respectively of a further form of fixing in accordance with said one example of the invention;
Figure 13 is a view similar to Figure 11 of a still further form of fixing in accordance with said one example of the invention;
Figure 14 is a view similar to Figure 3 illustrating a further form of fixing in accordance with a second example of the present invention;
Figure 15 is a view similar to Figure 1 illustrating fixings similar to Figure 1 but in accordance with the second example of the invention;
Figure 16 is a plan view of a further fixing in accordance with the second example of the invention;
Figure 17 is a side elevational view of the fixing of Figure 16;
Figure 18 is a view similar to Figure 16 of a further form of fixing in accordance with the second example of the invention;
Figure 19 is a side elevational view of the fixing of Figure 18;
Figure 20 is a plan view of a further fixing in accordance with said second example of the invention;
Figure 21 is a side elevational view of the fixing of Figure 20;
Figure 22 is a diagrammatic cross-sectional view of a further form of fixing in accordance with said second example of the invention and an alternative form of fastener for use with the fixing; and;
Figure 23 is a view similar to Figure 22 illustrating a different form of fastener in accordance with said second example of the invention;

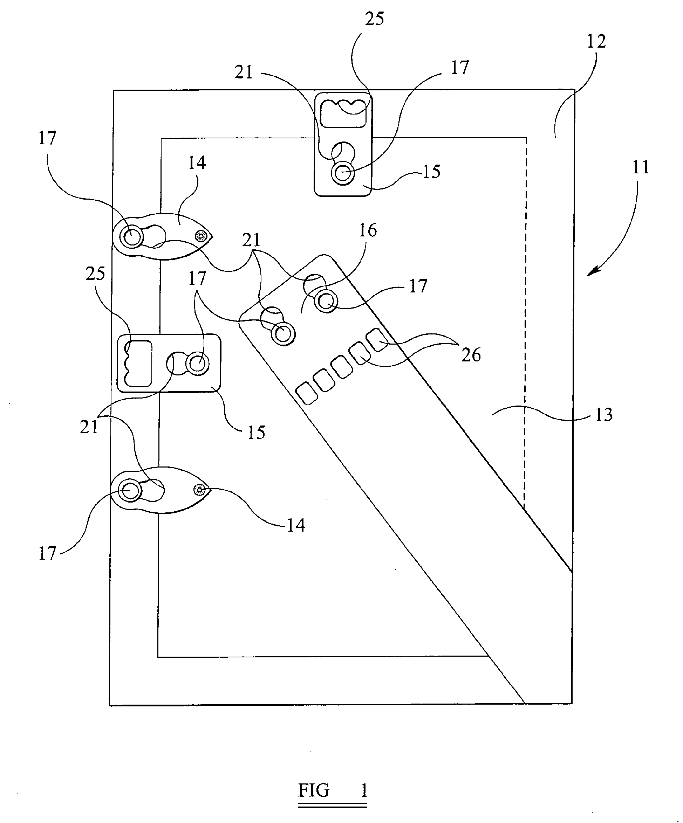

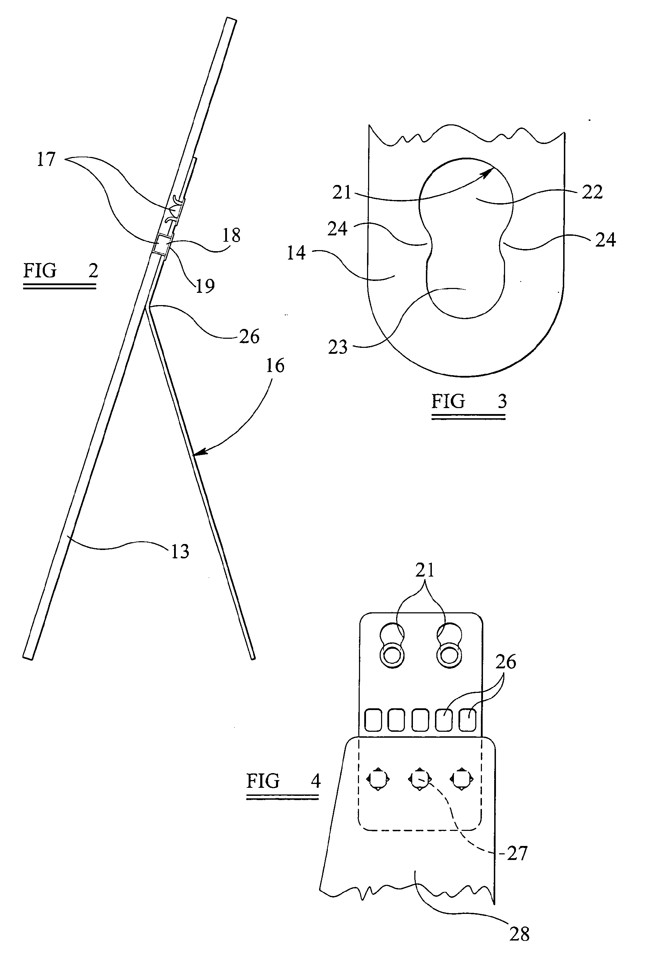

Referring first to Figures 1, 2 and 3 of the accompanying drawings, Figure 1 shows a picture frame 11 which consists of a rectangular peripheral frame member 12 receiving a rectangular backing board 13. In use, as will be well understood by those skilled in the art, a rectangular sheet of glass may be inserted into the frame member 12 to seat against a peripheral, inwardly extending, lip of the frame member 12, and art material or the like can be sandwiched between the glass and the rectangular backing board 13 so as to be visible through the glass. However, in some applications the glass may be omitted or a mirror may be substituted for the glass and the art material. In some applications the picture frame lacks the peripheral frame member 12, and art material, mirror or the like is fixed directly to the backing board 13.

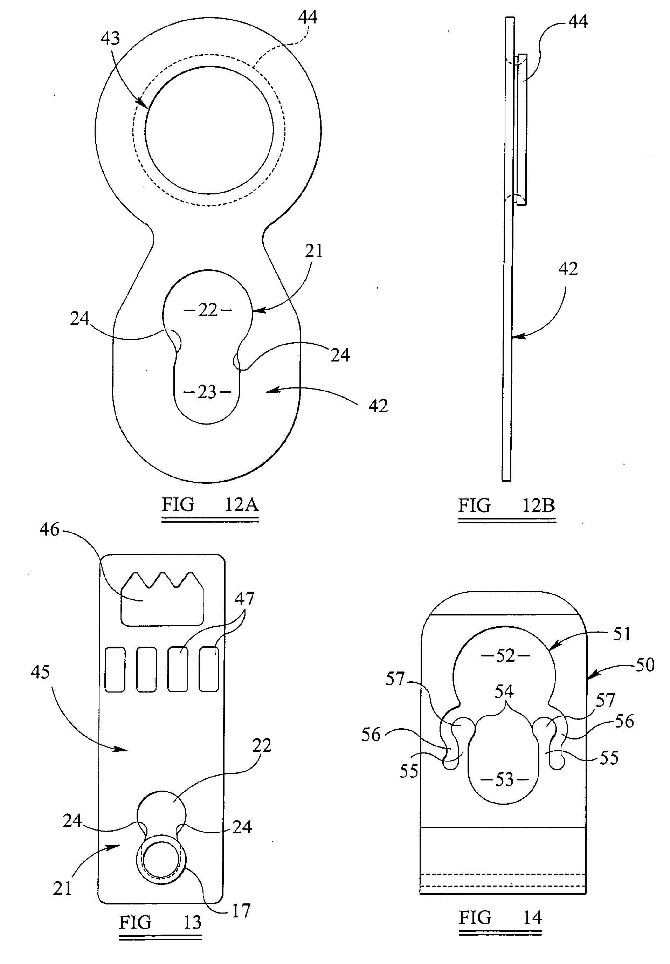

As will be described hereinafter Figures 10, 22 and 23 illustrate how this may be accomplished. However, the exact form of the picture frame is not of critical importance to the present invention as will become clear hereinafter.

In Figure 1 three different types of fixing are illustrated. However the remaining drawings show a wide variety of fixings and it is to be recognised that all of the fixings disclosed herein are formed primarily from sheet metal as a pressing or stamping operation. The invention is not however restricted to such fixings.

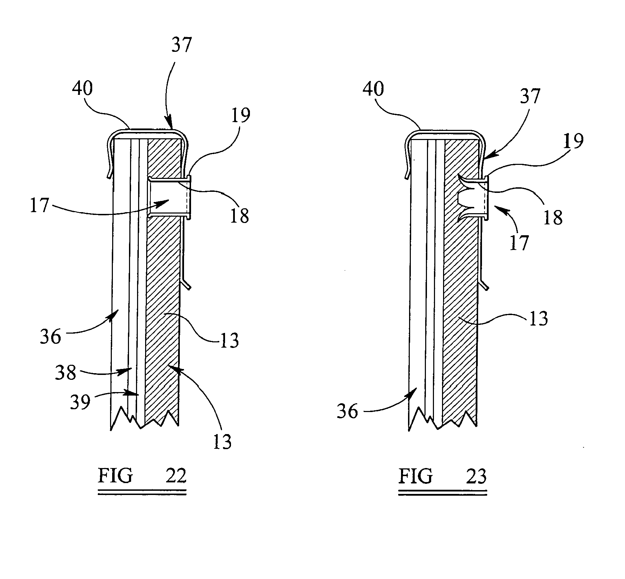

In Figure 1 there is illustrated a pair of turn clips 14, a pair of hangers 15 and an easel back 16. Each of the fixings 14, 15, 16 is secured to the picture frame, either to the backing board 13 or the peripheral frame member 12, by one or more fasteners 17 in the form of a hollow, cylindrical, metal rivet having a shank 18 projecting rearwardly from the picture frame. The outer end of the projecting shank is rolled over outwardly to define a peripheral flange 19 constituting an enlarged head at the free, projecting end of the rivet. Such rivets will be well known to those skilled in the art, as will be the method of fixing of the rivet to the backing board or peripheral frame member of the picture frame. In Figures 22 and 23, and also in Figure 2, it is shown that the rivet can either pass through the backing board to be spread outwardly on the inner face of the backing board to lock the rivet to the backing board, or alternatively the rivet can incorporate integral prongs which spread outwardly, in the form of a rosette (Figure 23), to lock the end of the rivet within the material of the backing board 13 or peripheral frame member 12. Each fixing 14, 15, 16 includes a planar region having therein a keyhole-shaped slot 21 (see Figure 3). As is customary, each keyhole slot 21 includes a first part circular portion 22 of a relatively large diameter, and extending therefrom a portion 23 which is elongate, and which has a part circular end wall at its end remote from the portion 22. The width of the portion 23 is less than the diameter of the portion 22. In relation to the fastener 17 with which the fixing is to be utilised, the diameter of the portion 22 is slightly larger than the diameter of the head 19 of the fastener 17 and the width of the portion 23 of the slot 21 is slightly larger than the diameter of the shank 18 of the fastener 17 but less than the diameter of the head 19 of the fastener. However, in accordance with the present invention there is provided intermediate the portions 22 and 23, a neck region 24 the width of which is less than the width of the elongate region 23, and less than the diameter of the shank 18 of the fastener.

In use the fixing can be attached to a respective fastener projecting from the picture frame by engaging the fixing over the fastener such that the head 19 of the fastener passes through the portion 22 of the slot 21, and then sliding the fixing at right angles to the length of the fastener 17 to cause the shank 18 of the fastener 17 to enter the portion 23 of the slot 21. It will be understood that when the shank 18 of the fastener 17 lies within the portion 23 of the slot 21 then the fixing cannot be lifted from the fastener 17 since the head 19 cannot pass through the portion 23 of the slot 21.

However, in order for the shank 18 to reach the portion 23 of the slot 21 from the portion 22, it is necessary for the shank 18 to pass through the narrow neck region 24. Because the width of the neck region 24 is less than the outer diameter of the shank 18 of the fastener 17 some resilient deformation of the material of the fixing is needed. Thus immediately after the shank 18 passes beyond the region 24 into the portion 23 the deformation of the fixing restores back to its original condition so that the shank 18 enters the portion 23 of the slot 21 as a snap-fit. Thereafter inadvertent disengagement of the fixing from the fastener 17 cannot readily occur. The fixing cannot lift axially from the fastening 17 because it is impeded by the head 19, and lateral movement of the fixing relative to the shank 18 to permit the head 19 to align with the portion 22 of the slot 21 is impeded by the neck region 24. Thus although the fixing can rotate freely about the axis of the fastening 17 if desired, inadvertent detachment of the fixing from the fastener 17 is resisted.

The fixing 14 illustrated in Figure 1 can be turned from the position shown, through over 90°, to release the backing board 13 from the peripheral frame member 12. It will be understood that if desired the fixing 14 could be attached by a fastener 17 to the backing board rather than to the peripheral frame member 12. In such an arrangement the fixing 14 would be rotated about its fastener 17 to engage the peripheral frame member 12. Desirably the free end of the fixing 14 will have a protrusion which bears against the backing board 13 (or the frame member 12) to resist inadvertent rotation of the fixing about its respective fastener.

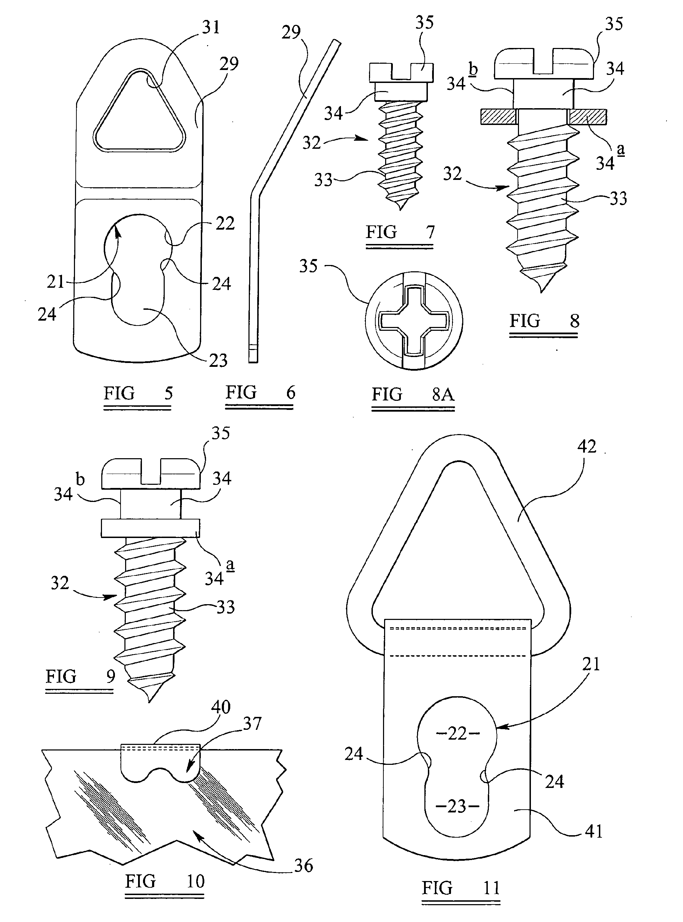

The fixings 15 are hanging brackets, and have an aperture 25 shaped to provide a number of hanging positions. The easel back 16 is secured in place by two fasteners 17 and is pierced across its width at 26 to allow it to be bent to lie at an angle to the backing board 13 to form a prop as shown in Figure 2. Figure 4 illustrates a modification of the easel back of Figure 1 in which the metal component is of reduced length, but is riveted, by means of integral rivets 27 to an elongate limb 28 which can be formed from backing board material.

Figures 5 and 6 illustrate an alternative form of hanger 29 which can be used, if desired, in place of the hanger 15 of Figure 1. It can be seen that the hanger 29 has a triangular aperture 31 and is bent intermediate the aperture 31 and the keyhole-shaped aperture 21.

Figure 7 illustrates a screw fastener which may be used in place of the rivet type fasteners 17. It can be seen that the screw fastener 32 has a threaded shank 33 to be screwed into the backing board, or the material of the peripheral frame member 12, an integral, plain cylindrical shank region 34 desirably but not essentially of larger diameter than the threaded region 33 and coextensive therewith, and a cylindrical head 35 slotted to receive a screwdriver, and having an outer diameter greater than the outer diameter of the region 34. In use the screw fastener 32 is screwed into the material of the picture frame until the screw threaded region 33 is buried, and the junction of the screw threaded region 33 and the plain cylindrical region 34 seats against the rear face of the picture frame. Thereafter, a fixing can be attached to the fastener 32 exactly as described above, with the portion 22 of the keyhole-shaped slot 21 passing over the head 35, and the fixing then being moved laterally to snap the plain cylindrical region 34 into the portion 23 of the slot 21.

Figure 8 illustrates a modification of the arrangement in Figure 7 in which a metal washer 34a is trapped in use between the junction of the regions 33 and 34 of the shank and the backing board or the like to provide a circumferential groove 34b in which the fixing slides to its snap fit position. As shown in Figure 8A the head 35 of the screw can have a combined slot, cross-head and square drive formation for receiving a range of driving tools. Figure 9 illustrates a screw similar to that of Figure 8 but in effect having the washer 34a integral therewith by having an increased diameter region 34 formed with a circumferential groove 34b which separates the head 35 from an integral outwardly extending peripheral flange 34a. In the arrangements of Figures 8 and 9 the width of the groove 34b is greater than the thickness of the material of the associated fixing ensuring that there is sufficient clearance to engage the fixing with the fastener without binding.

Figure 11 illustrates a further alternative fixing 41 which is a further form of hanger, particularly suitable for anchoring one end of a hanging cord or the like of the picture frame. Again the fixing includes a generally planar sheet metal portion having a keyhole-shaped aperture 21 therein for snap-fit association with a respective fastener 17, 32, the fixing 41 being bent to form a tubular region receiving one side of a triangular wire ring 42.

Figures 12A and 12B are plan and side views respectively of a further form of hanger 42 again formed with a keyhole-shaped slot 21 for cooperation with a respective fastener, and having at its end removed from the slot 21, a circular aperture 43 which has been formed by a plunging operation defining a thickened circular flange 44 on one face of the fixing 42.

Figure 13 illustrates yet a further form of hanger 45 similar to the hanger 15 of Figure 1 in that it has the keyhole-shaped slot 21 for association with a fastener 17 or 32, and has, adjacent its opposite end, an aperture 46 similar to the aperture 25 of the hanger 15 having a serated edge to provide a plurality of alternative hanging points. However, intermediate the aperture 46 and the slot 21 the hanger 45 has a transversely extending row of apertures 47 to provide a line along which the hanger 45 can readily be bent so that the region of the hanger 45 containing the aperture 46 extends at an angle to the remainder of the hanger. In the example described, the material would generally not be heat treated in order to provide the resilience at the neck region 24.

Figures 14 to 23 illustrate hangers in accordance with a second example of the invention, and Figure 14 illustrates the shaping of an aperture 51 for snap engagement with a fastener 17 or 32. Thus referring to Figure 14 it can be seen that the fixing 50 is formed with a keyhole-shaped slot 51 having a part circular portion 52 and extending therefrom an elongate portion 53 having a part circular end wall. As with the slot 21 described above the portion 52 is of a diameter able to accept therethrough the head of the respective fastener, and the width of the portion 53 is less than the diameter of the portion 52 so as to be able to accommodate the shank of the fastener but not to allow the head of the fastener to pass therethrough.

Intermediate the portions 52 and 53 of the slot 51, the slot is formed with a narrow neck region 54 the width of which is less than the diameter of the shank of the associated fastener. However, it can be seen that the narrow neck region 54 of the fixing 50 is defined by inwardly curved regions of respective parallel fingers 55 integral with the remainder of the fixing 50, but separated therefrom by elongate slot regions 56 extending from the slot 51. It can be seen that the edges of the fingers 55 which border the slot 51 define part of the wall of the portion 53 of the slot 51 and the fingers have enlarged, part circular, free end regions 57 the inwardly presented surfaces of which define the narrow neck region 54 of the slot 51.

It is to be understood that the slot 51 of the fixing 50 functions in an extremely similar manner to the slot 21 described above. However, whereas distortion of the material of the body of the fixing around the neck region 24 of the slot 21 is required for the slot 21 to function, the slot 51 of the fixing 50 cooperates with its respective fastener to provide the snap-action as the shank of the fastener moves from the portion 52 into the portion 53 of the slot, by flexure of the fingers 55. It is believed that the slot arrangement 51 illustrated in Figure 14 can achieve a more reliable, and repeatable snap-action since there is less risk of the material of the fixing and/or the fastener being damaged during the snap-action. In one embodiment the fixing 50 is of steel which may be hardened (heat treated) to enhance the spring effect of the fingers 55. In another embodiment, the fixing 50 may be formed from an alloy having physical properties such that it does not require hardening to enhance the spring effect of the fingers 55.

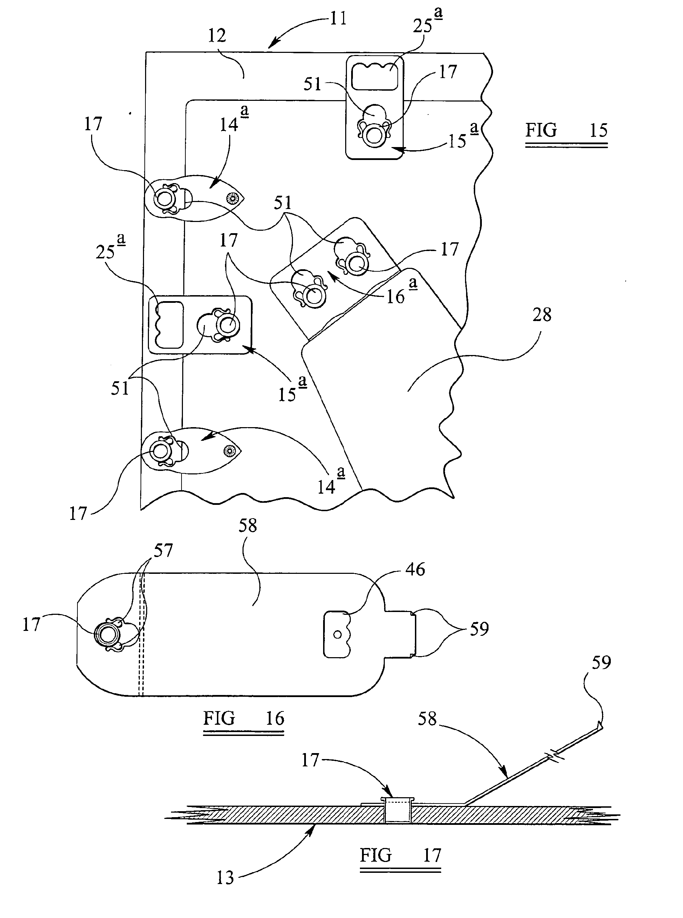

Figure 15 is a view similar to Figure 1 but illustrating fixings similar to the fixings 14, 15, 16 provided with slots 51 rather than 21. These fixings are identified in Figure 15 as 14a, 15a, 16a respectively. The multipoint hanging apertures of the brackets 15a are shown in Figure 15 as 25a. The easel back 16a of Figure 15 has a leg 28 secured thereto by rivets integral with the fixings 16a or similar fastening devices.

Figures 16 and 17 illustrate a still further form of fixing 58 which has an aperture 51 as shown in Figure 14, and a multipoint hanging aperture 46 similar to that of the fixing 45 of Figure 13. The fixing 58 is bent intermediate its ends so that the region of the fixing 58 which has the aperture 46 is inclined away from the backing board 13 and defines an elongate spring strip in use. The free end of the fixing 58 has sharpened upstanding points 59 which can, by virtue of flexure of the inclined portion of the fixing 58 towards the backing board 13, be latched underneath a lip of a peripheral frame member 12 to assist in securing the backing board 13 to the frame member 12.

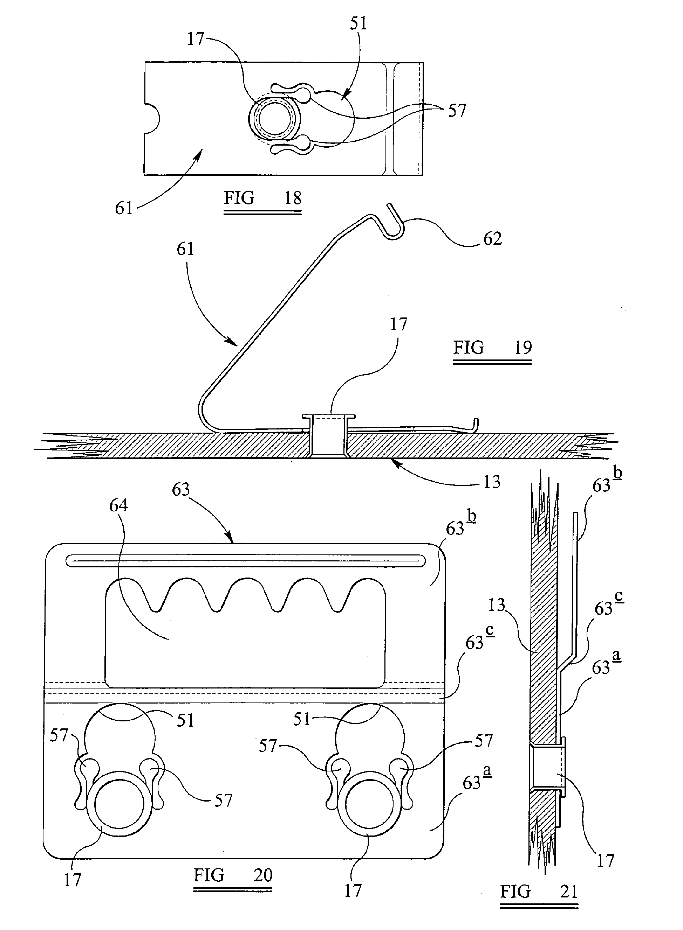

Figures 18 and 19 illustrate a fixing 61 secured to a backing board 13 by means of a fastener 17 and a keyhole-shaped slot 51, the fixing 61 being in the form of a V-shaped spring steel clip one limb of which has the slot 51, and the other limb of which is formed with a hooked end region 62 for engagement underneath a lip of a peripheral frame member 12 so as to press the backing board into the frame member and to secure the backing board thereto. In a modification the hooked region 62 is replaced by a straight projection which engages in a slot in the peripheral frame member.

Figures 20 and 21 illustrate a further form of fixing 63 comprising a multipoint hanger. The fixing 63 comprises first and second integral, coplanar portions 63a, 63b which are spaced apart from one another by an integral, inclined, intermediate portion 63c. The portion 63a abuts the backing board 13 of a picture frame and is secured thereto by means of two fasteners 17 each engaging a respective slot 51 in the portion 63a. The portion 63b which stands away from, but parallel to, the backing board 13 has an aperture 64 one edge of which is serated to provide a plurality of spaced apart recesses for receiving a hanging hook, nail or the like in use.

Figures 22, 23 and 10 illustrate a picture frame in which there is no peripheral frame member 12. The backing board 13 has a glass plate 36 clipped thereto by means of fixings 37. Art material 38 and a backing sheet 39 may be trapped between the glass plate 36 and the backing board 13. A plurality of fixings 37 will be attached by means of fasteners 17 at spaced locations around the periphery of the backing board 13, and each fixing 37 is attached to its fastener 17 (or 32) as described above by way of a keyhole-shaped slot 51 in the fixing cooperating as a snap-fit with the shank 18 (or 34) of the respective fastener 17 (or 32). Furthermore, each fixing 37 includes a U-shaped spring clip 40 embracing the edge region of the picture frame, and having a first limb bearing against the rear face of the backing board 13 and a second, generally parallel limb, bearing against the front face of the glass plate 36. The spring clips 40 thus press the glass plate 36 the art material 38 and the backing sheet 39, against the backing board 13, and serve also to restrict lateral movement of the glass plate, the art material 38 and the backing sheet 39 in their respective planes.

It is to be recognised that the exact nature of the fixing is not of crucial importance to the present invention, and the slots 21 and 51 can be utilised with a wide variety of different fixings known in the picture framing art. Furthermore, each of the fixings illustrated and described herein can have either a slot 21 or a slot 51 and each can be used with a variety of different fasteners 17, 32.

The material of the fixing can be hardened and/or tempered if desired, for example locally in the area of neck region 24, 54. Whereas a steel fixing having the slot form shown at 21 will usually not be hardened, steel fixings having the slot form 51 may be hardened or otherwise heat treated to enhance the spring qualities of the fingers 55. Alternatively, fixings having the slot form 51 may be formed from an alloy having physical properties such that it does not require hardening or heat treatment to enhance the spring qualities of the fingers 55.

In a modification the fingers 55, joined at one end to the material of the remainder of the fixing may be replaced by bowed elements integral with the remainder of the fixing at both ends, and being defined by pierced slots alongside the slot 51.

While the invention has been described above in relation to the use of rivets or screws as the fastener it is to be understood that the fastener could take other forms such as a nail or the like. Moreover a nail could have a head and parallel integral flange defining between them a circumferential groove as described above with reference to Figure 9.

## Claims

1. A picture frame fixing (14,15,16) for use in conjunction with a fastener (17,32) having a shank (18,34) and an enlarged head (19,35), the fixing (14,15,16) having therein a keyhole-shaped slot (21,51) comprising a large diameter portion (22,52) dimensioned to permit passage therethrough of the head (19,35) of the associated fastener (17,32), a narrower portion (23,53) dimensioned to receive the shank (18,34) of the fastener (17,32) but narrower than the head (19,35) of the fastener (17,32), and, intermediate the enlarged (22,52) and narrower (23,53) portions of the slot (21,51) a narrow neck region (24,54) the width of which is less than the corresponding dimension of the shank (18,34) of the associated fastener (17,32) such that during relative movement of the fixing (14,15,16) and the fastener (17,32) resilient deformation permits the shank (18,34) to pass through the narrow neck (24,54) to achieve a snap-fit in said narrower portion (23,53) of said keyhole-shaped slot (21,51).

2. A picture frame fixing (14,15,16) according to claim 1 wherein said neck region (24,54) of said slot (21,51) is bounded by one or more elements (55) integral with the material of the fixing (14,15,16), and moveable relative thereto, by resilient flexure of the element (55).

3. A picture frame fixing (14,15,16) according to claim 2 wherein the or each element (55) is in the form of a resilient finger.

4. Apparatus comprising a picture frame fixing (14,15,16) according to any preceding claim in combination with a fastener (17,32) having a shank (18,34) and an enlarged head (19,35).

5. Apparatus according to claim 4 wherein said fastener is a hollow tubular rivet (17) having said head (19) defined by a flange at one end thereof.

6. Apparatus according to claim 4 wherein said fastener is a screw (32) having a threaded shank region (32), a plain shank region (34), and a head (35) of larger diameter than the plain shank region (34).

7. Apparatus according to claim 6 wherein said plain shank region (34) is of larger diameter than said threaded shank region (32).

8. Apparatus according to claim 7 wherein said plain shank region (34) has a circumferential groove (34b) for receiving said fixing (14,15,16).

9. Apparatus according to claim 4 wherein said fastener includes a washer (34a) which abuts the end of the plain shank region (34) and defines with said head (35), a circumferential groove (34b) for receiving said fixing (14,15,16).

10. A picture frame (11) including a picture frame fixing (14,15,16) according to any of claims 1 to 3 or an apparatus according to any of claims 4 to 9.
